# EUROPÄISCHE PATENTSCHRIFT

(11) **EP 1 765 742 B1**
(45) Veröffentlichungstag und Bekanntmachung des Hinweises auf die Patenterteilung: **12.03.2008**
(21) Anmeldenummer: 04743934.4
(22) Anmeldetag: 09.07.2004
(51) Int. Cl.: C04B 28/02

(54) **BAUSTOFF MIT PFLANZLICHEM ZUSCHLAG**
BUILDING MATERIAL WITH A PLANT FILLER
MATERIAU DE CONSTRUCTION CONTENANT UN ADDITIF VEGETAL

(43) Veröffentlichungstag der Anmeldung: 28.03.2007
(73) Patentinhaber: Miscanthus-Nawaro-Innovations S.A., 2520 Luxembourg (LU)
(72) Erfinder: HÖHN, Heribert, L-7563 Mersch (LU)
(74) Vertreter: Kihn, Pierre Emile Joseph
(86) Internationale Anmeldenummer: PCT/IB2004/002272
(87) Internationale Veröffentlichungsnummer: WO 2006/010985

(56) Entgegenhaltungen:
- EP-A- 1 307 411
- WO-A-94/05737
- WO-A-20/04037742
- US-A- 1 678 345

## Beschreibung

Die Erfindung betrifft ein Verfahren zur Herstellung eines Baustoffes gemäss Oberbegriff des unabhängigen Anspruchs 1.

Im Stand der Technik sind vielfältige Kombinationen auf der Grundlage pflanzlicher Rohstoffe bekannt. Forschungen, Entwicklungen und Versuche werden weiter durchgeführt. Einerseits wird das Bauwesen durch den Einsatz derartiger Rohstoffe innovativ und ökologisch: Mensch und Natur werden dank ressourcenschonender und gesundheitsfreundlicher, nachwachsender Rohstoffe in Einklang gebracht. Andererseits aber werfen diese Baustoffe das Problem auf, optimal ausgeglichene Eigenschaften (niedriges spezifisches Gewicht, Wärmeleitfähigkeit bzw. Warmedurchgangskoeffizient, Schallisolierung, Biege-, Druck- und Zugfestigkeit, sowie Beständigkeit (Alterungsprozess)) zu erzielen.

Die EP-1,307,411 A2 offenbart ein Verfahren zur Herstellung eines derartigen Baustoffes. Es hat sich jedoch gezeigt, dass die in diesem Dokument erwähnten Eigenschaften wie Wärmedämmung, Schallisolierung, Biege- und Druckfähigkeit ungenügend sind und mit der Zeit sogar abklingen. Dies ist einerseits auf den vorgeschlagenen, zu einer mangelhaften Mineralisation führenden Mineralisator und das angegebene Wertintervall des Gewichtsanteils dieses Mineralisators pro Kubikmeter pflanzlichem Zuschlag, nämlich 4 bis 14 kg, vorzugsweise 6 bis 12 kg, und andererseits an das beschriebene Verfahren, zurückzuführen. Daher erscheint, über das offensichtlich sehr beschränkte Anwendungsgebiet des so gewonnenen Baustoffes hinaus, eine reelle Anwendbarkeit des letzteren ausgeschlossen.

WO 2004/037742 A1 beschreibt ein Verfahren zum Herstellen eines ein Bindemittel sowie einen Mineralisator enthaltenden Baustoff auf pflanzlicher Basis, sowie den daraus gewonnenen Baustoff. Als Mineralisator wird hier eine Mischung von Kalziumkarbonat CaCO₃ und Magnesiumkarbonat MgCO₃ vorgesehen, so dass im Vergleich mit EP-1,307,411 eine wesentlich bessere Mineralisation des pflanzlichen Zuschlags stattfinden sollte und somit zu einem Universalbaustoff, wie in WO 2004/037742 A1 benannt, führen könnte, der sowohl an Effizienz als auch an Vielseitigkeit der Anwendungsmöglichkeiten gewinnen dürfte. Doch bleibt dem Fachmann das Durchführen weiterer Forschungsarbeiten und Versuchen nicht erspart, da die in dieser Schrift veröffentlichten Wertintervalle der Komponenten bezüglich der den Mineralisator bildenden Mischung M2 und der die Bindemittelmatrix bildenden, aus Zement und M2 bestehenden Mischung M1 viel zu breit sind, also genanntem Fachmann unzureichende Informationen liefern. Es stellt sich u. a. die Frage, ob der Baustoff für die eine oder andere Anwendung bestimmte Eigenschaften wie Druckfestigkeit nicht übermässig erfüllt, sich jedoch im Hinblick auf andere Eigenschaften wie Wärmeleitfähigkeit als schlecht oder zumindest unzureichend erweist. Was das Verfahren angeht, so dürfte es vermutlich wirtschaftlich sein, doch wird dadurch eine optimale Mineralisierung, also Klebefähigkeit, die sich der Fachmann aufgrund des gewählten Mineralisators erhoffen kann, in Wirklichkeit nicht erreicht.

In Anbetracht verschiedenster Anwendungen bzw. Bestimmungen des Baustoffes werden jeweils die optimalen spezifischen werte der Mischungen sowie enge und somit zuverlässige Wertintervalle dieser Mischungen - innerhalb welcher sich genannte Optimalwerte befinden - definiert. Daraus können auch allgemein gültige Wertintervalle, also Mischungs-Standardbereiche abgeleitet werden, auf die immer wieder zurückgegriffen werden kann, als zusammenfassendes Ergebnis oder Extrapolation der spezifischen Anwendungsbezogenen Einzelwerte. Dies bedeutet, dass ein Baustoff, der nach diesen Standardbereichen hergestellt wird, zwar für eine spezifische Anwendung nicht optimal sein mag, doch dafür trotzdem einsetzbar sein wird, weil die mechanischen / physikalischen Mindestforderungen immer erfüllt sind. Weiter ist jeweils die Struktur bzw. Form des pflanzlichen Zuschlags zu bestimmen, da auch diese Parameter die Eigenschaften des Baustoffes beeinflussen.

Aufgabe der vorliegenden Erfindung ist daher die Festlegung eines geeigneten Verfahrens, welches insbesondere einer ausgezeichneten Klebefähigkeit des pflanzlichen Zuschlags also dessen Einbindung in die Matrix, grösste Sorge trägt, und die Betrachtung der Wirtschaftlichkeit nicht ausser Auge lässt.

Diese Aufgabe wird durch die im kennzeichnenden Teil des unabhängigen Anspruchs 1 definierten, allgemein gültigen Wertbereiches der Zusammensetzungen des Baustoffes gelöst; Die abhängigen Ansprüche geben innerhalb dieser Bereiche Auskunft über optimale Mischungswerte der Baustoffkomponenten für spezifische Anwendungen. Im Zuge dieser Optimierung sind die Verfahrenschritte zur Herstellung des Baustoffes definiert.

Das erfindungsgemässe Herstellungsverfahren wird nun im nachstehenden Teil I näher beschriebenen, bevor im darauffolgenden Teil II auf die Rahmenbedingungen der Zusammensetzung bzw. der Rezeptur des erfindungsgemässen Baustoffes eingegangen wird, wobei zur Illustration Beispiele von Mischungen in Anbetracht einiger spezifischen Anwendungen beschrieben werden.

### Teil I: Herstellungsverfahren des Baustoffes

Notwendige Grundlage für eine gute Effizienz und Funktionszuverlässigkeit eines Baustoffes mit pflanzlichem Zuschlag im Laufe der Zeit ist, dass letzterer mit dem Bindemittel optimal verklebt. Dabei spielen verschiedene Faktoren eine bedeutende Rolle. Zu diesen Faktoren gehören die Wahl des Mineralisators hinsichtlich Struktur und Zusammensetzung, die Art und Weise der Beimischung dieses Mineralisators zu den anderen im Baustoff vorkommenden Komponenten während des Herstellungsverfahrens, sowie die vom pflanzlichen Zuschlag aufzuweisende Restfeuchtigkeit.

Als Mineralisator bringt die im Stand der Technik bekannte Mischung von Kalziumkarbonat CaCO₃ und Magnesiumkarbonat MgCO₃ im Vergleich zu anderen bekannten Mineralisatoren die besseren Voraussetzungen mit sich. Der Mineralisator muss zu ca. 95 % feingemahlen, also pulverförmig sein (Korngrösse zwischen 0 mm und 0.09 mm), um den pflanzlichen Zuschlag gut zu ummanteln und in diesen einzudringen, wobei die Feinstoffe und die Kristallinen zur Erwirkung der Klebefähigkeit freigesetzt werden.

Die Klebefähigkeit wurde anhand von zahlreichen Proben getestet, wobei aus den Aufzeichnungen entnommen werden konnte, dass diese als ausreichend bis hervorragend bewertet werden konnte, wenn CaCO₃ und MgCO₃ zueinander ein Gewichtsverhältnis von 60 zu 40 bis 70 zu 30 aufweisen. Die Tests wurden mit als Naturprodukt vorkommenden, Nebenteile wie SiO₂, Al₂O₃, Fe₂O₃ und / oder SO₃, also nicht carbonatische Bestandteile umfassenden Mineralisatoren durchgeführt, die bis 10 Gewichtsanteile betrugen. Überraschend konnte eine hervorragende Klebefähigkeit bei Mineralisatoren festgestellt werden, bei welchen das Gewichtsverhältnis CaCO₃ zu MgCO₃ sich in einem engen Bereich von 61 zu 34 bis 64 zu 35 bewegt, während die nicht carbonatischen Bestandteile einerseits und CaCO₃ und MgCO₃ andererseits zueinander ein Gewichtsverhältnis von 5 zu 95 bis 1 zu 99 aufwiesen.

Der pflanzliche Zuschlag muss quasi trocken sein, das heisst mit einer Restfeuchte von ca. 15 % bearbeitet werden, um seine notwendige Saugfähigkeit zu gewähren. Miscanthus, eine der bevorzugten Komponente des pflanzlichen Zuschlages (siehe unten) weist bei der Ernte diese Restfeuchte auf, so dass es nicht nötig ist, ihn vorher trocknen zu müssen.

Der Baustoff wird gemäss folgender Schritte hergestellt:
1/ eine vorbestimmte Menge des zerkleinerten pflanzlichen Zuschlags mit angegebener Restfeuchte wird in einen Mischer (Ringtrogmischer / Tellermischer mit Wirbler) hineingeschüttet;
2/ die in Abhängigkeit der Menge des pflanzlichen Zuschlages bzw. der vorgesehenen Verwendung des Baustoffes benötigten Mengen von Anmachwasser (gegebenenfalls mit einem Fungizid angereichert) und von Mineralisator werden hinzugefügt.
   Von der Menge des Anmachwassers hängt bekanntlich die erhaltene Konsistenz Kᵢ ab, welche ebenfalls in Anbetracht des Verwendungszweckes und / oder anderweitiger
   Rahmenbedingungen (z. B. Transport des Baustoffes in Mischern) gewählt werden kann (K1 = Erdfeucht, K2 = weich, K3 = sehr weich, fast fliessend). Das Anmachwasser wird wie auch bei herkömmlichem Beton zu ca. 15 - 20 % beim Abbinden eingebunden, während ca. 80 - 85 % austrocknet.
   Das Eingeben des Mineralisators und des Wassers können gleichzeitig und binnen wenigen Sekunden erfolgen. Sämtliche Komponenten {pflanzliche Basis + Wasser + Mineralisator} werden dann während einer für eine komplette Befeuchtung des pflanzlichen Zuschlags notwendigen, aus der Erfahrung und Versuche bekannten Zeit T1 zusammengemischt;
3/ nach Ablauf der Zeit T1 wird die vorbestimmte Menge von Bindemittel der Mischung (pflanzlicher Zuschlag + Wasser + Mineralisator} binnen weniger Sekunden zugefügt und dann während einer Zeit T2 weiter zusammengemischt.

Bei zahlreichen durchgeführten Versuchen wurden 1000 Liter pflanzlicher Zuschlag in einer ersten Phase der Mineralisator und das Wasser vorteilhaft in ca. 5 resp. ca. 12 Sekunden zugegeben. Diese drei Komponenten wurden während ca. einer Minute (= T1) gemischt, was die Einleitung der Mineralisierung bzw. Verkieselung erlaubte. Nach Ablauf dieser Minute erfolgte die Bindemittelzugabe in ca. 4 - 5 Sekunden. Sämtliche Komponenten wurden während weitere ca. 4 - 5 Minuten (= T2) zusammengemischt, was zu einer innig gemischten Leichtbetonmasse führte. Längere Mischzeiten sind zu vermeiden, da sie zum Entmischen der Masse führen können.

Einerseits wurde festgestellt, dass unter normalen Druck- und Temperaturbedingungen die Mineralisierung nach ca. 60 - 70 Minuten beendet ist. Andererseits beginnt nach dieser Zeitspanne das Erstarren des Bindemittels.

Die zur Herstellung der Klebefähigkeit zwischen dem pflanzlichen Zuschlag und dem Bindemittel unentbehrliche Mineralisierung muss zum Zeitpunkt des Beginnens der Erstarrung des Bindemittels nicht nur begonnen haben, sondern beendet sein, da nach Erstarrungsbeginn eine Mineralisierung nicht mehr möglich ist (der keinerlei Bindekraft aufweisende Mineralisator wird vom Zement miteingebunden und folglich wirkungslos). Wiederholte Versuche haben gezeigt, dass das erfindungsgemässe Verfahren diese Bedingung optimal erfüllt. Ferner wird der Ablauf des so optimierten Herstellungsverfahrens in kürzester Zeit durchgeführt.

Die vorzusehenden Mengen bzw. Proportionen der verschiedenen Komponenten (Mischungen) wurden jeweils in Anbetracht spezifischer Verwendungszwecke festgelegt und werden nun näher beschrieben.

### Teil II: Beschreibung des Baustoffes

Es wird allgemein verlangt, dass ein Baustoff für einen bestimmten Einsatz geeignet ist, dass er also jeweils Eigenschaften aufweist, die im Einklang mit dem Verwendungszweck stehen. Es hat sich erwiesen, dass der gemäß Anspruch 1 hergestellte Baustoff diese Forderung völlig erfüllt und dass sein Anwendungsfeld - wie aus den nachstehenden, nicht ausschöpfenden Beispielen hervorgeht - quasi unbegrenzt ist.

Betrachtet werden Anwendungen, die in drei Gruppen eingeordnet werden können. In den Anwendungen einer ersten Gruppe ist der Baustoff für verschiedene Wände vorgesehen, nämlich Aussenwänden, insbesondere für den Bau von Wohnhäusern (Beispiel A) und Schnellbauplatten (Beispiel B).

Eine zweite Gruppe betrifft Absorptionsschichten für Schallschluckwände (Beispiel C). Schliesslich geht es in der dritten Gruppe um einen Baustoff, der für den Verputz eingesetzt wird, also für den Innenputz (Beispiel D), Aussenputz (Beispiel E) und Wärmedämmputz (Beispiel F). Dabei werden jeweils optimale Rezepturen angegeben und gegebenenfalls enge Wertintervalle innerhalb welchen sich letztere befinden.

Bevor die einzelnen Beispiele erörtert werden, ist folgendes zu bemerken:

Als pflanzlicher Zuschlag kommt insbesondere in Betracht Miscanthus (Chinaschilf), Nadelholz, Zuckerrohr, Hanfschäben und / oder -fasern, Switschgras (panicum virgatum), italienisches Raigras, Riedschilf, einzeln oder in verschiedenen Kombinationen miteinander.

Der pflanzliche Zuschlag wird in Partikel, das heisst in Fasern, Späne und / oder Rundkörner zerkleinert, wobei entsprechende bekannte Sieblinien eingesetzt werden. Welche Partikelform und -grösse vorzuziehen bzw. zu wählen ist, wird in Anbetracht der beabsichtigten Anwendung des Baustoffes entschieden. Es konnte festgestellt werden, dass das spezifische Gewicht der so vorbereiteten pflanzlichen Basis verschiedenster Beimischungen (also eine Restfeuchte von ca. 15 % aufweisender Partikel) zwischen ca. 120 und ca. 140 kg/m³ liegt.

Bei den nachstehend zur Illustration beschriebenen Beispielen wird lediglich entweder Miscanthus oder eine Mischung von Miscanthus und Nadelholz (rindenfrei) eingesetzt. Das durchschnittliche spezifische Gewicht beträgt dabei ca. 130 kg/m³.

Die darin angegebenen Werte beziehen sich jeweils auf 1 m³ dieser Mischung.

Als Bindemittel wurde für die oben angeführten Beispiele A, B und C Portlandzement der Güte PZ 52,5, für die Beispiele D, E und F eine zwei-Komponente Mischung, nämlich Portlandzement der Güte PZ 52,5 und Calciumhydroxid Ca(OH)₂ (fachsprachlich auch Kalkhydrat genannt), gewählt.

Wie bereits gesagt kann das Anmachwasser mit einem Fungizid angereichert werden. Versuche wurden mit, andere ohne diesen Zusatzstoff durchgeführt, wobei kein Einfluss auf die mechanischen / physikalischen Eigenschaften des Baustoffes festgestellt werden konnte.

### Beispiel (A): Aussenwände

### (a) Pflanzlicher Zuschlag:

Miscanthus, Faserlängenbereich ca. [0 - 35] mm

### (b) Mineralisator:

Menge: ca. 118 kg (spezifisches Gewicht ca. 1.18 kg/l), mit folgenden Gewichtsanteilen der Komponenten:

| | |
|---|---|
| CaCO₃: | ca. 62 % |
| MgCO₃: | ca. 34 % |
| Nebenstoffe: | ca. 04 % |

### (c) Bindemittel:

Menge: ca. 220 bis 260 kg, vorzugsweise 240 kg

### (d) Anmachwasser:

Menge: ca. 300 bis 350 kg, vorzugsweise 300 kg (= Konsistenz K1)

### (e) Gewichtsanteile Bindemittel / Mineralisator:

| | |
|---|---|
| Wertintervalle: | 65 zu 35 bis 69 zu 31 |
| Bevorzugt: | 67 zu 33 |

### Beispiel (B): Schnellbauplatten

### (a) Pflanzlicher Zuschlag:

Mischung {Miscanthus + Nadelholz}

| | |
|---|---|
| Miscanthus: Faserlängenbereich | ca. [0 - 3] mm |
| Nadelholz: Späne | ca. [0 - 3]mm |
| Gewichtsanteile: | ca. 50 zu 50 |

### (b) Mineralisator:

Menge: ca. 100 kg
Gewichtsanteile der Komponenten: wie Beispiel (A)

### (c) Bindemittel:

Menge: wie Beispiel (A)

### (d) Anmachwasser:

Menge: wie Beispiel (A)

### (e) Gewichtsanteile Bindemittel / Mineralisator:

| | |
|---|---|
| Wertintervalle: | 69 zu 31 bis 72 zu 28 |
| Bevorzugt: | 70.5 zu 29.5 |

### Beispiel (C): Absorptionsschichten für Schallschluckwände

### (a) Pflanzlicher Zuschlag:

Mischung (Miscanthus + Nadelholz)
Gewichtsanteile:
ca. 30 (entspricht ca. 39 kg Miscanthus) zu
ca. 70 (entspricht ca. 91 kg Nadelholz)

| | | |
|---|---|---|
| Miscanthus: | Faserlängenbereich | ca. [2 - 35] mm, und |
| Nadelholz: | Rundkorndurchmesser | ca. [6 - 8] mm, Anteil 65 % |
| | Spänelänge: | ca. [3 - 30] mm, Anteil 35 % |

### (b) Mineralisator:

Menge: 130 kg (entspricht ca. 110 1)
Gewichtsanteile der Komponenten: wie Beispiel (A)

### (c) Bindemittel:

Menge: wie Beispiel (A)

### (d) Anmachwasser:

Menge: wie Beispiel (A)

### (e) Gewichtsanteile Bindemittel / Mineralisator:

| | |
|---|---|
| Wertintervalle: | 63 zu 37 bis 66.66 zu 33.33 |
| Bevorzugt: | 65 zu 35 |

### Beispiel (D): Innenputz

### (a) Pflanzlicher Zuschlag:

Mischung von (Miscanthus + Nadelholz}
Gewichtsanteile 50 zu 50 (entspricht je 65 kg).

| | | |
|---|---|---|
| Miscanthus: | Faserlängenbereich | ca. [0 - 2.5] mm, und |
| Nadelholz: | Späne | ca. [0 - 2.5] mm |

### (b) Mineralisator:

Menge und Gewichtsanteile der Komponenten: wie Beispiel (C)

### (c) Bindemittel: zwei Komponenten, nämlich:

(Portlandzement PZ 52.5 + Calciumhydroxid Ca(OH)₂)

| | |
|---|---|
| Menge: | ca. 260 kg, davon |
| PZ: | ca. 115 kg |
| Ca(OH)₂: | ca. 145 kg (entspricht ca. 300 1) |

### (d) Anmachwasser:

Menge: wie Beispiel (A)

### (e) Gewichtsanteile Bindemittel / Mineralisator:

66.66 zu 33.33

### Beispiel (E): Aussenputz

### (a) Pflanzlicher Zuschlag:

wie Beispiel (D), wobei je nach Strukturwunsch gröbere Sieblinien ausgewählt werden können.

### (b) - (e): wie Beispiel (D)

### Beispiel (F): Wärmedämmputz

### (a) Pflanzlicher Zuschlag:

Mischung von {Miscanthus und Nadelholz}
Gewichtsanteile: 80 zu 20 (entspricht ca. 104 zu 26 kg);

| | | |
|---|---|---|
| Miscanthus: | Faserlängenbereich: | ca. [0 - 4] mm, und |
| Nadelholz: | Späne: | ca. [0 - 4] mm. |

### (b) - (e): wie Beispiel (D)

Aus der Analyse der Werte die anhand dieser Beispiele verzeichnet wurden und sich immer bestätigt haben kann festgestellt werden, dass unabhängig von der Anwendungsgruppe innerhalb welcher der Baustoff einzureihen ist, das Bindemittel und der Mineralisator zueinander ein Gewichtsverhältnis von 63 zu 37 bis 72 zu 28 aufweisen, so dass diese Proportionen, zuzüglich zu den bereits unter Teil I für den Mineralisator angegebenen Werten, als Grundstandard für die Herstellung des Baustoffes betrachtet werden können.

Die Proportionen der Komponenten des Baustoffes, insbesondere des Bindemittels zu dem Mineralisator, sowie der Bestandteile dieses Mineralisators zueinander führen zu einem perfekten Kompromiss gemäss welchem eine hervorragende Klebefähigkeit des pflanzlichen Zuschlags mit dem Bindemittel und ausgezeichnete Eigenschaften hinsichtlich Druckfestigkeit, Biegezugfestigkeit, Wärmeleitfähigkeit, Schalldämpfung und Gewicht erzielt werden.

So ergaben nach 28 Tagen durchgeführte Messungen an mit dem erfindungsgemässen Baustoff hergestellten Proben von Aussenwänden eine Wärmeleitfähigkeit λ von 0.064 W/(m x K) (zum Vergleich erreichen Styropor einen λ-Wert von 0.04 und Hochlochziegel-Porotonsteine 0.36. Bei 30 cm dicken wänden erreichte der Wärmedurchgangskoeffizient U = 0.24 W/(m²× K), was die Anforderungen an den Wärmeschutz der Wände von Niedrigenergiehäusern erfüllt, und einen U-Wert von 0.192 W/m²K.

Die Schallabsorptionsmessungen gemäss ZTV-Lsw 88-Richtlinien des TUV Rheinland an einem Lärmschutzelement bzw. einer Schazlschluckwand bestehend aus einer 15 cm dicken Absorptionschicht gemäss oben beschriebenem Beispiel und einer 10 cm dicken Trägerschicht beweisen, dass diese Wand als hochabsorbierende Fläche zu bewerten ist (ΔL_{α,ASec}= ca. 8 dB). Dies ist insbesondere der hohen Haufwerksporigkeit (Hohlräume im Baustoff).

Das Gewicht von mit dem gemäß Anspruch 1 hergestelltem Baustoff hergestellten Schriellbauplatten (siehe oben, Beispiel (B)) mit den Massen (L = 2500 mm, B = 1250 mm, D = 13 mm) beträgt, inklusive Spezialpapier und Klebestoff und nach Abzug des austrocknenden Wassers, ca. 22 kg. Dies entspricht also einem Gewicht von 7.04 kg/m², also ca. 2/3 des Gewichtes einer Rigipsplatte (10.2 kg/m²).

Schliesslich wurde die Druckfestigkeit der Aussenwände (siehe oben, Beispiel (A)) gemessen. Werte bis zu 9.43 N/mm2, wurden verzeichnet. Die Biegezugfestigkeit beträgt ca. 3.64 N/mm2.

Somit bildet das vorgeschlagene Verfahren einen in perfekter Symbiose mit dem neuen Konzept der nachhaltigen Entwicklung stehenden substantiellen Fortschritt auf dem Gebiet der Baustofftechnologien.

## Patentansprüche

1. Verfahren zum Herstellen eines Baustoffes mit pflanzlichem Zuschlag, **dadurch gekennzeichnet, dass**
1/ eine vorbestimmte Menge von in Partikel vordefinierter Größe zerkleinertem, trockenem pflanzlichen Zuschlag mit einer Restfeuchte von ca. 15 % in einen Mischer hineingeschüttet wird,
2/ zu dieser Menge pflanzlichem Zuschlag entsprechende Mengen von Mineralisator und Wasser hinzugefügt werden und dass sämtliche Komponenten {pflanzliche Basis + Mineralisator + Wasser} während einer definierten Zeitdauer T1 zusammengemischt werden,
3/ nach Ablauf der Zeitdauer T1 die zur Menge des pflanzlichen Zuschlags entsprechenden Menge von Bindemittel der Mischung {pflanzliche Basis + Wasser + Mineralisator} hinzugegeben wird und dass
4/ die Mischung {pflanzlicher Zuschlag + Wasser + Mineralisator + Bindemittel} während einer Zeitdauer T2 zusammengemischt wird,
wobei der Mineralisator Karbonate, nämlich Kalziumkarbonat CaCO₃ und Magnesiumkarbonat MgCO₃, enthält, wobei CaCO₃ und MgCO₃ zueinander ein Gewichtsverhältnis von 60 zu 40 bis 70 zu 30 aufweisen, der Mineralisator ferner Nebenstoffe enthält deren Gewichtsanteile im Verhältnis zu den Karbonaten bis zu 10 Gewichtsanteile betragen, und Bindemittel und Mineralisator zueinander ein Gewichtsverhältnis von 63 zu 37 bis 72 zu 28 aufweisen und T1 und T2 so definiert sind, dass die Mineralisierung der pflanzlichen Basis zum Zeitpunkt des Beginnens des Erstarren des Bindemittels beendet ist.

2. Verfahren gemäss Anspruch 1, **dadurch gekennzeichnet, dass** T1 ca. 1 Minute und T2 ca. 4 - 5 Minuten beträgt.

3. Verfahren gemäss einem der Ansprüche 1 oder 2, **dadurch gekennzeichnet, dass** CaCO₃ und MgCO₃ im Mineralisator ein Gewichtsverhältnis von 61 zu 34 bis 64 zu 35, vorzugsweise 62 zu 34 haben, wobei CaCO₃ und MgCO₃ einerseits und die Nebenbestandteile andererseits zueinander ein Gewichtsverhältnis von 95 zu 5 bis 99 zu 1, vorzugsweise 96 zu 4 aufweisen.

4. Verfahren gemäss einem der Ansprüche 1 bis 3, **dadurch gekennzeichnet, dass** die Nebenteile im Mineralisator aus nicht karbonatischen Bestandteilen wie SiO₂, Al₂O₃, Fe₂O₃ und/oder SO₃ bestehen.

5. Verfahren gemäss einem der Ansprüche 1 bis 4, **dadurch gekennzeichnet, dass** das spezifische Gewicht des pflanzlichen Zuschlags zwischen ca. 120 und ca. 140 kg/m³ liegt und vorzugsweise im Durchschnitt ca. 130 kg/m³ beträgt.

6. Verfahren gemäss einem der Ansprüche 1 bis 5, **dadurch gekennzeichnet, dass** pro Kubikmeter des pflanzlichen Zuschlages ca. 220 bis 260 kg Bindemittel, vorzugsweise Portlandzement der Güte 52.5, ca. 100 bis 130 kg Mineralisator und ca. 300 bis 350 Liter Anmachwasser beigemischt werden.

7. Verfahren gemäss Anspruch 6, **dadurch gekennzeichnet, dass** dem pflanzlichen Zuschlag vorzugsweise 240 kg Portlandzement der Güte 52.5, 118 kg Mineralisator und 300 Liter Anmachwasser beigemischt werden, wobei Bindemittel und Mineralisator ein Gewichtsverhältnis zueinander von ca. 67 zu 33 aufweisen.

8. Verfahren gemäss Anspruch 5 oder 6, **dadurch gekennzeichnet, dass** der pflanzliche Zuschlag aus Miscanthusfasern besteht derer Längen in einem Bereich von ca. 0 - 35 mm liegen.

9. Verfahren gemäss Anspruch 6, **dadurch gekennzeichnet, dass** dem pflanzlichen Zuschlag vorzugsweise 240 kg Portlandzement der Güte 52.5, 100 kg Mineralisator und 300 Liter Anmachwasser beigemischt werden, wobei Bindemittel und Mineralisator ein Gewichtsverhältnis zueinander von ca. 70 zu 30 aufweisen.

10. Verfahren gemäss Anspruch 6 oder 9, **dadurch gekennzeichnet, dass** der pflanzliche Zuschlag aus einer Mischung von Miscanthusfasern und Nadelholzspänen besteht, wobei die Länge dieser Fasern resp. Späne in einem Bereich von ca. 0 - 3 mm liegt und dass Miscanthus und Nadelholz ein Gewichtsverhältnis zueinander von ca. 50 zu 50 aufweisen.

11. Verfahren gemäss Anspruch 6, **dadurch gekennzeichnet, dass** dem pflanzlichen Zuschlag vorzugsweise 240 kg Portlandzement der Güte 52.5, 130 kg Mineralisator und 300 Liter Anmachwasser beigemischt werden, wobei Bindemittel und Mineralisator ein Gewichtsverhältnis zueinander von ca. 65 zu 35 haben.

12. Verfahren gemäss Anspruch 6 oder 11, **dadurch gekennzeichnet, dass** der pflanzliche Zuschlag aus einer Mischung von Miscanthusfasern, Nadelholzspänen und Nadelholzrundkörnern besteht, wobei die Miscanthusfasern in einem Längenbereich von ca. 2 - 35 mm, die Nadelholzspäne in einem Längenbereich von ca. 3 - 30 mm und die Nadelholzrundkörner in einem Durchmesserbereich von ca. 6 - 8 mm liegen, dass Miscanthus und Nadelholz ein Gewichtsverhältnis zueinander von ca. 30 zu 70 haben und dass Späne und Rundkörner einen Anteil zueinander von ca. 35 zu 65 aufweisen.

13. Verfahren gemäss Anspruch 6, **dadurch gekennzeichnet, dass** dem pflanzlichen Zuschlag ca. 260 kg Bindemittel, ca. 130 kg Mineralisator und ca. 300 Liter Anmachwasser beigemischt werden, wobei Bindemittel und Mineralisator ein Gewichtsverhältnis zueinander von ca. 66.66 zu 33.33 aufweisen.

14. Verfahren gemäss Anspruch 13, **dadurch gekennzeichnet, dass** das Bindemittel aus Portlandzement der Güte 52.5 und aus Kalziumhydroxid besteht und dass diese zwei Komponenten ein Gewichtsverhältnis zueinander von 44 zu 56 aufweisen.

15. Verfahren gemäss Anspruch 6, 13 oder 14, **dadurch gekennzeichnet, dass** der pflanzliche Zuschlag aus einer Mischung von Miscanthusfasern und Nadelholzspänen besteht, wobei diese zwei Komponenten ein Gewichtsverhältnis zueinander von ca. 50 zu 50 aufweisen und die Längen der Fasern resp. der Späne in einem Bereich von wenigstens 0 - 2.5 mm liegen.

16. Verfahren gemäss Anspruch 6, 13, 14, oder 15, **dadurch gekennzeichnet, dass** der pflanzliche Zuschlag aus einer Mischung von Miscanthusfasern und Nadelholzspänen besteht, wobei diese zwei Komponenten ein Gewichtsverhältnis zueinander von ca. 80 zu 20 aufweisen und die Längen der Fasern resp. der Späne in einem Bereich von 1 - 4.0 mm liegen.

17. Verwendung eines Verfahrens gemäss Anspruch 6, 7 oder 8 zur Herstellung eines Bauelements oder Teils eines Bauwerks, insbesondere einer Außenwand für Wohnbauten.

18. Verwendung eines Verfahrens gemäss Anspruch 6, 9 oder 10 zur Herstellung eines Bauelements oder Teils eines Bauwerks, insbesondere einer Schnellbauplatte.

19. Verwendung eines Verfahrens gemäss Anspruch 6, 11 oder 12 zur Herstellung eines Bauelements oder Teils eines Bauwerks, insbesondere einer Absorptionsschicht für Schallschluckwände.

20. Verwendung eines Verfahrens gemäss Anspruch 6, 13, 14 oder 15 zur Herstellung eines Bauelements, insbesondere eines Innenputzes und/oder Außenputzes.

21. Verwendung eines Verfahrens gemäss Anspruch 16 zur Herstellung eines Bauelements, insbesondere eines Wärmedämmputzes.

## Claims

1. A method for making a building material with a vegetable aggregate, **characterized in that**
1/ a predetermined amount of dry vegetable aggregate milled into a particles of predefined size with a residual humidity of about 15% is poured into a mixer,
2/ to this amount of vegetable aggregate are added corresponding amounts of mineralizer and water, and **in that** all the components {vegetable base + mineralizer + water} are mixed together for a defined duration T1,
3/ after elapse of the duration T1, the amount of binder corresponding to the amount of vegetable aggregate, is added to the mixture {vegetable base + water + mineralizer} and **in that**
4/ the mixture {vegetable aggregate + water + mineralizer + binder} is mixed together for a duration T2,
the mineralizer containing carbonates, i.e. calcium carbonate CaCO₃, and magnesium carbonate MgCO₃; CaCO₃ and MgCO₃ having a weight ratio from 60:40 to 70:30 relatively to each other, the mineralizer further containing auxiliary materials, the parts by weight of which amount up to 10 parts by weight relatively to the carbonates, and the binder and the mineralizer having a weight ratio from 63:37 to 72:28 relatively to each other and T1 and T2 being defined so that the mineralization of the vegetable base is finished at the moment of onset of the setting of the binder

2. The method according to claim 1, **characterized in that** T1 is about 1 minute and T2 about 4-5 minutes

3. The method according to any of claims 1 or 2, **characterized in that** CaCO₃ and MgCO₃ in the mineralizer have a weight ratio from 61:34 to 64:35, preferably 62:34, CaCO₃ and MgCO₃ on the one hand and the auxiliary components on the other hand having a weight ratio from 95:5 to 99:1, preferably 96:4 relative to each other

4. The method according to any of claims 1 to 3, **characterized in that** the auxiliary parts in the mineralizer consist of non-carbonate components such as SiO₂, Al₂O₃, Fe₂O₃, and/or SO₃.

5. The method according to any of claims 1 to 4, **characterized in that** the specific weight of the vegetable aggregate is between about 120 and about 140 kg/m³ and preferably on average is about 130 kg/m³.

6. The method according to any of claims 1 to 5, **characterized in that** about 220 to 260 kg of binder, preferably Portland cement of grade 52 5, about 900 to 130 kg of mineralizer and about 300 to 350 liters of mixing water are mixed together per cubic meter of the vegetable aggregate

7. The method according to claim 6, **characterized in that** preferably 240 kg of Portland cement of grade 52 5, 118 kg of mineralizer and 300 liters of mixing water are mixed together with the vegetable aggregate, the binder and mineralizer having a weight ratio of about 67:33 relatively to each other

8. The method according to claim 5 or 6, **characterized in that** the vegetable aggregate consists of miscanthus fibers, the lengths of which lie in a range from about 0 to 35 mm

9. The method according to claim 6, **characterized in that**, preferably 240 kg of Portland cement of grade 52.5, 100 kg of mineralizer and 300 liters of mixing water are mixed together with the vegetable aggregate, the binder and mineralizer having a weight ratio of about 70:30 relatively to each other

10. The method according to claim 6 or 9, **characterized in that** the vegetable aggregate consists of a mixture of miscanthus fibers and pine wood chips, the lengths of these fibers, of these chips respectively, lying in a range from about 0 to 3 mm and **in that** miscanthus and pine wood have a weight ratio of about 50:50 relatively to each other

11. The method according to claim 6, **characterized in that** preferably 240 kg of Portland cement of grade 52 5, 130 kg of mineralizer and 300 liters of mixing water are mixed together with the vegetable aggregate, the binder and the mineralizer having a weight ratio of about 65: 35 relatively to each other

12. The method according to claim 6 or 11, **characterized in that** the vegetable aggregate consists of a mixture of miscanthus fibers, pine wood chips and round pine wood pellets, the miscanthus fibers lying in a range of lengths from about 2 to 35 mm, the pine wood chips lying in a range of lengths from about 3 to 30 mm and the round pine wood pellets lying in a range of diameters from about 6 to 8 mm, **in that** miscanthus and pine wood have a weight ratio of about 30:70 relatively to each other and that the chips and round pellets have a proportion of about 35:65 relatively to each other

13. The method according to claim 6, **characterized in that** about 260 kg of binder, about 130 of mineralizer and about 300 liters of mixing water are mixed together with the vegetable aggregate, the binder and mineralizer having a weight ratio of about 66.66:33.33 relatively to each other

14. The method according to claim 13, **characterized in that** the binder consists of Portland cement of grade 52.5 and of calcium hydroxide and that these two components have a weight ratio of 44:56 relatively to each other

15. The method according to claim 6, 13 or 14, **characterized in that** the vegetable aggregate consists of a mixture of miscanthus fibers and pine wood chips, these two components having a weight ratio of about 50:50 relatively to each other and the length of the fibers, of the chips respectively, lying in a range from at least 0 to 25 mm

16. The method according to claim 6, 13, 14 or 15, **characterized in that** the vegetable aggregate consists of a mixture of miscanthus fibers and pine wood chips, these two components having a weight ratio of about 80:20 relatively to each other and the lengths of the fibers, of the chips respectively, lying in a range from 1 to 4.0 mm

17. The use of a method according to claim 6, 7, or 8, for making a building element or part of a building, in particular an outer wall for residential buildings

18. The use of a method according to claim 6, 9 or 10, for making a building element or part of a building, in particular a rapid building panel

19. The use of a method according to claim 6, 11, or 12, for making a building element or part of a building, in particular an absorption layer for sound absorbing walls

20. The use of a method according to claim 6, 13, 14 or 15, for making a building element, in particular an indoor plaster and/or and outdoor plaster.

21. The use of a method according to claim 16, for making a building element, in particular a heat insulation plaster

## Revendications

1. Procédé pour la préparation d'un matériau de construction comprenant un supplément végétal, **caractérisé en ce que**
1) une quantité prédéterminée d'un supplément végétal sec, broyé pour obtenir des particules de dimension prédéfinie, possédant une humidité résiduelle d'environ 15 %, est introduite dans un mélangeur ;
2) à cette quantité de supplément végétal, des quantités correspondantes d'un minéralisateur et d'eau sont ajoutées et l'ensemble des composants {base végétale + minéralisateur + eau} sont mélangés pendant un laps de temps défini T1 ;
3) après le déroulement du laps de temps T1, la quantité de liant correspondant à la quantité du supplément végétal est ajoutée au mélange {base végétale + minéralisateur + eau} ; et
4) le mélange {supplément végétal + eau + minéralisateur + liant} est mélangé pendant un laps de temps T2,
le minéralisateur contenant des carbonates, plus précisément du carbonate de calcium CaCO₃ et du carbonate de magnésium MgCO₃, le CaCO₃ et le MgCO₃ présentant l'un par rapport à l'autre un rapport pondéral de 60 40 à 70 30, le minéralisateur contenant en outre des substances secondaires dont les fractions pondérales, par rapport aux carbonates, s'élèvent jusqu'à 10 parties en poids, et le liant et le minéralisateur présentant l'un par rapport à l'autre un rapport pondéral de 63 37 à 72: 28, et T1 et T2 étant définis de telle sorte que la minéralisation de la base végétale s'achève lorsque le durcissement du liant commence

2. Procédé selon la revendication 1, **caractérisé en ce que** T1 représente environ 1 minute et T2 représente environ 4 - 5 minutes.

3. Procédé selon l'une quelconque des revendications 1 ou 2, **caractérisé en ce que** le CaCO₃ et le MgCO₃, dans le minéralisateur, possèdent un rapport pondéral de 61 34 à 64 : 35, de préférence de 62 : 34, le CaCO₃ et le MgCO₃ d'une part et les constituants secondaires d'autre part présentant, les uns par rapport aux autres, un rapport pondéral de 95 5 à 99 1, de préférence de 96 4.

4. Procédé selon l'une quelconque des revendications 1 à 3, **caractérisé en ce que** les constituants secondaires, dans le minéralisateur, sont constitués par des composants non carbonatés tels que SiO₂, Al₂O₃, Fe₂O₃ et/ou SO₃,

5. Procédé selon l'une quelconque des revendications 1 à 4, **caractérisé en ce que** le poids spécifique du supplément végétal se situe entre environ 120 et environ 140 kg/m³, et s'élève de préférence en moyenne à environ 130 kg/m³.

6. Procédé selon l'une quelconque des revendications 1 à 5, **caractérisé en ce que**, par mètre cube du supplément végétal, on ajoute par mélange d'environ 220 à 260 kg de liant, de préférence du ciment Portland de qualité 52. 5, d'environ 100 à 130 kg de minéralisateur et d'environ 300 à 350 litres d'eau de gâchage.

7. Procédé selon la revendication 6, **caractérisé en ce que** l'on ajoute par mélange au supplément végétal, de préférence 240 kg de ciment Portland de qualité 52.5, 118 kg de minéralisateur et 300 litres d'eau de gâchage, le liant et le minéralisateur présentant l'un par rapport à l'autre un rapport pondéral d'environ 67 à 33

8. Procédé selon la revendication 5 ou 6, **caractérisé en ce que** le supplément végétal est constitué par des fibres de miscanthus dont les longueurs se situent dans la plage d'environ 0 à 35 mm

9. Procédé selon la revendication 6, **caractérisé en ce que** l'on ajoute par mélange au supplément végétal, de préférence 240 kg de ciment Portland de qualité 525, 100 kg de minéralisateur et 300 litres d'eau de gâchage, le liant et le minéralisateur présentant l'un par rapport à l'autre un rapport pondéral d'environ 70 à 30.

10. Procédé selon la revendication 6 ou 9, **caractérisé en ce que** le supplément végétal est constitué d'un mélange de fibres de miscanthus et de copeaux de conifères, la longueur de ces fibres, respectivement de ces copeaux se situant dans la plage d'environ 0 à 3 mm, et **en ce que** le miscanthus et le conifère présentent l'un par rapport à l'autre un rapport pondéral d'environ 50 à 50

11. Procédé selon la revendication 6, **caractérisé en ce que** l'on ajoute par mélange au supplément végétal, de préférence 240 kg de ciment Portland de qualité 52.5, 130 kg de minéralisateur et 300 litres d'eau de gâchage, le liant et le minéralisateur présentant l'un par rapport à l'autre un rapport pondéral d'environ 65 à 35

12. Procédé selon la revendication 6 ou 11, **caractérisé en ce que** le supplément végétal est constitué d'un mélange de fibres de miscanthus, de copeaux de conifères et de grains ronds de conifères, les fibres de miscanthus se situant dans une plage de longueurs d'environ 2 à 35 mm, les copeaux de conifères se situant dans une plage de longueurs d'environ 3 à 30 mm et les grains ronds de conifères se situant dans une plage de diamètres d'environ 6 à 8 mm, **en ce que** le miscanthus et le conifère présentent l'un par rapport à l'autre un rapport pondéral d'environ 30 à 70, et **en ce que** les copeaux et les grains ronds présentent l'un par rapport à l'autre une proportion d'environ 35 à 65.

13. Procédé selon la revendication 6, **caractérisé en ce que** l'on ajoute par mélange au supplément végétal, environ 260 kg de liant, environ 130 kg de minéralisateur et environ 300 litres d'eau de gâchage, le liant et le minéralisateur présentant l'un par rapport à l'autre un rapport pondéral d'environ 66.66 à 33 33

14. Procédé selon la revendication 13, **caractérisé en ce que** le liant est constitué par du ciment Portland de qualité 52.5 et par de l'hydroxyde de calcium, et **en ce que** ces deux composants présentent l'un par rapport à l'autre un rapport pondéral de 44 à 56

15. Procédé selon la revendication 6, 13 ou 14, **caractérisé en ce que** le supplément végétal est constitué d'un mélange de fibres de miscanthus et de copeaux de conifères, ces deux composants présentant l'un par rapport à l'autre un rapport pondéral d'environ 50 à 50, et les longueurs des fibres, respectivement des copeaux se situant dans la plage d'au moins 0 - 2. 5 mm

16. Procédé selon la revendication 6, 13, 14 ou 15, **caractérisé en ce que** le supplément végétal est constitué d'un mélange de fibres de miscanthus et de copeaux de conifères, ces deux composants présentant l'un par rapport à l'autre un rapport pondéral d'environ 80 à 20, et les longueurs des fibres, respectivement des copeaux se situant dans la plage de 1 - 4.0 mm.

17. Utilisation d'un procédé selon la revendication 6, 7 ou 8, pour la fabrication d'un élément de construction ou d'une partie de bâtiment, en particulier pour la fabrication d'une paroi extérieure pour des immeubles d'habitation

18. Utilisation d'un procédé selon la revendication 6, 9 ou 10, pour la fabrication d'un élément de construction ou d'une partie de bâtiment, en particulier pour la fabrication d'un panneau de construction rapide

19. Utilisation d'un procédé selon la revendication 6, 11 ou 12, pour la fabrication d'un élément de construction ou d'une partie de bâtiment, en particulier pour la fabrication d'une couche d'absorption de parois antibruit.

20. Utilisation d'un procédé selon la revendication 6, 13, 14 ou 15, pour la fabrication d'un élément de construction, en particulier d'un enduit interne et/ou d'un enduit externe.

21. Utilisation d'un procédé selon la revendication 16, pour la fabrication d'un élément de construction, en particulier d'un enduit calorifuge
